Europäisches Patentamt

**European Patent Office**

**Office européen des brevets**

(19)

(11) Publication number: **0 194 727**

**A1**

(12) **EUROPEAN PATENT APPLICATION**

(21) Application number: **86200382.9**

(22) Date of filing: **10.03.86**

(51) Int. Cl.⁴: **G 01 N 17/00**
**B 01 L 1/02, B 01 J 3/00**
**//G01N23/227**

(30) Priority: **11.03.85 NL 8500679**

(43) Date of publication of application:
**17.09.86 Bulletin 86/38**

(84) Designated Contracting States:
**DE FR GB NL**

(71) Applicant: **EUROPEAN ATOMIC ENERGY COMMUNITY**
**(EURATOM)**
**Batiment Jean Monnet Plateau du Kirchberg Boite**
**Postale 1907**
**Luxembourg(LU)**

(72) Inventor: **van der Biest, Omer**
**Die 17**
**NL-1862 HW Bergen(NL)**

(72) Inventor: **von Birgelen, Gerhard**
**Westerweg 158**
**NL-1815 DK Alkmaar(NL)**

(72) Inventor: **Schipper, Adrianus**
**Spaaknes 16**
**NL-1862 AV Bergen(NL)**

(74) Representative: **Smulders, Theodorus A.H.J. et al,**
**Vereenigde Octrooibureaux Nieuwe Parklaan 107**
**NL-2587 BP 's-Gravenhage(NL)**

(54) Apparatus for examining the effect of a gaseous medium on a material at high temperatures.

(57) Apparatus for examining the effect of a gaseous medium on a material. The apparatus comprises a space (1) in which a vacuum can be generated, and a reaction cell (2) within said space. The cell includes heating means (12) and as an aperture for introducing a specimen of the material into the cell, a supply line (7) and a discharge line (4) for the gaseous medium, and a specimen holder (6) adapted to be coupled to said specimen introducing aperture in vacuum-tight relationship while the end of said specimen holder (6) carries the specimen (9) being tested. The specimen holder (6) and the supply and discharge lines (7, 4) for the gaseous medium terminate outside the space (1) in which the vacuum can be generated.

FIG.1

Apparatus for examining the effect of a gaseous medium on a material at high temperatures.

This invention relates to apparatus for examining the effect of a gaseous medium on a material at high temperatures.

For examining the changes which occur at the surface of a material when this is subjected to the effect of a gaseous medium at a high temperature, it is necessary that the reaction between the gaseous medium and the material being tested takes place under accurately defined conditions, including the reaction temperature and the rate of flow and pressure of the gaseous medium, which should be accurately known. Furthermore, it is necessary that the material being tested can be rapidly cooled to avoid the occurrence of reactions which are not specific for the temperature at which the actual examination takes place. Finally, it is necessary to avoid that, after coming into contact with the gaseous medium, the material being tested can come into contact with the ambient air to prevent the surface of the material from being affected by oxidation.

It is known to carry out an examination into the effect of a gaseous medium on a material at high temperatures with a relatively low pressure of the gaseous medium, but the results obtained do not correspond with reality, in which the material is subjected, at a high temperature, to the effect of a gaseous medium which is under a relatively high pressure. The material subjected to the effect of a gaseous medium at a high temperature, which as a result of the reactions which occur is corroded can be examined, for example, by means of Auger electron spectroscopy or X-ray photo-electron spectroscopy.

It is an object of the present invention to provide apparatus which makes it possible to subject a material under the afore-said accurately defined conditions and at a high temperature to the effect of a gaseous medium which is under a relatively high pressure, and to that effect provides apparatus comprising a space in which a vacuum can be generated, a reaction cell within said space, said cell including heating means and having an aperture for introducing a specimen of the material into the cell, a supply line and a discharge line for the gaseous medium, and a specimen holder adapted to be coupled to said specimen introducing aperture in vacuum-tight relationship while the end of said specimen holder carries the specimen being tested, the specimen holder and the supply and discharge lines for the gaseous medium terminating outside the space in which the vacuum can be generated.

One embodiment of the invention will now be described, by way of example, with reference to the accompanying drawings, in which:

Fig. 1 shows a cross-sectional view of apparatus according to the invention; and

Fig. 2 shows an enlarged elevational view of the portion in Fig. 1 showing the coupling between the specimen holder and the reaction cell.

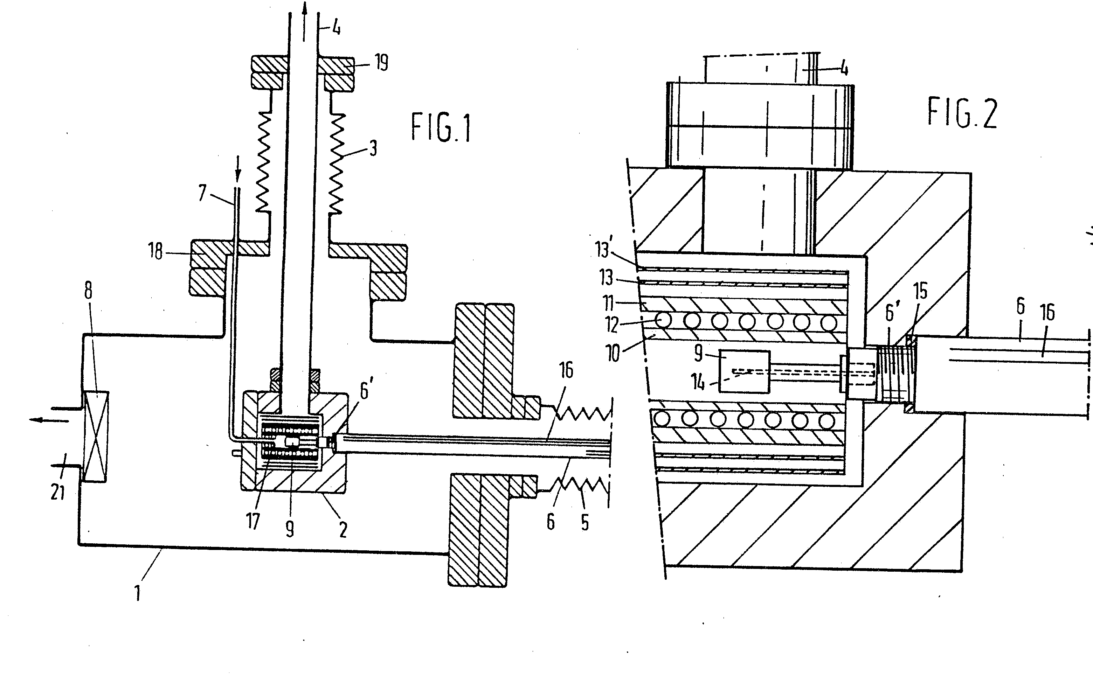

In Fig. 1, reference numeral 1 designates a space in which a vacuum can be generated. This space preferably forms a portion of a system for Auger electron spectroscopy or X-ray photo-electron spectroscopy.

Arranged within space 1 is a reaction cell 2 in which a specimen to be examined can be subjected to the effect of a gaseous medium. The reaction cell is made, for example, of stainless steel. Connected to space 1, in a manner known per se, by means of metal flanges 18 and 19, is a first vacuum bellows 3 through which a gas discharge line 4 can be coupled to space 1 in a vacuum-tight manner. A second vacuum bellows 5 is connected to space 1 by means of metal flanges 20 for introducing a sample holder 6 to space 1 in a vacuum-tight manner. The gas discharge line 4 carries reaction cell 2 within space 1 preferably in such a manner that the reaction cell is movable within this space.

Connected to reaction cell 2 is a flexible gas supply line 7 which, via flange 18, is passed to the outside of space 1. Space 1 further includes an aperture 21 that can be closed by means of a slidable closure member 8, through which aperture the space is in communication with an analysis chamber of an apparatus for Auger electron spectroscopy or X-ray photo-electron spectroscopy.

Fig. 2 shows, on an enlarged scale, the righthand portion of the reaction cell 2, as viewed in Fig. 1. By means of holder 6, a specimen 9 of the material to be examined can be introduced into the cell, the specimen being screwed into the end of the holder. The reaction cell further includes a heating element which surrounds specimen 9. This heating element may consist, for example, of ceramic tubes 10 and 11, between which a Pt heating wire 12 is coiled. In order that the heat generated by wire 12 should be concentrated on specimen 9 as much as possible, a pair of Pt heat shields 13 and 13' are preferably arranged to surround tube 11.

As shown in Fig. 1, another heating coil 17 is provided around the portion of the gas supply line 7 which extends into cell 2, in order to pre-heat the gas to be supplied to the sample. Such pre-heating may be desirable under certain conditions to prevent solid carbon from the gas from being deposited on the specimen and the ceramic parts in the reaction cell. However, pre-heating the test gas is not always necessary.

The specimen 9 has a longitudinal bore 14 therein, shown in dash lines, through which a thermocouple can be introduced, via the specimen holder, into the specimen to measure the temperature thereof.

As, during the reaction, a gas with a relatively high pressure is present in reaction cell 2, and a vacuum prevails outside this cell, the sealing between specimen holder 6 and cell 2 is highly critical. To ensure effective sealing, screw thread 6' is formed at the end of specimen holder 6, which is capable of co-operating with a complementary screw thread in the aperture for introducing the specimen holder in the wall of cell 2. A soft sealing ring 15 is provided between the end of the threaded portion of specimen holder 6 and a boss-shaped stop in the aperture. Known soft materials, such as Al or Cu proved to be unsuitable for the manufacture of sealing ring 15, because these materials are corroded under the influence of the gas. Surprisingly, a ring of Au was found to ensure very good sealing.

In order to maintain an optimum state of the seal between the sample holder 6 and the cell, in which, during the reaction, a very high temperature of, for example, 700-1100°C, and a pressure of, for example 2 bar prevail, a coolant, such as water, is passed through a conduit 16 in the specimen holder, shown diagrammatically, to the end of the specimen holder to cool the connection between the specimen holder and the cell.

Connected in known manner to heating coil 12 in the reaction cell are lines for the supply of electric energy, which are passed to the outside of space 1.

At the top of bellows 3, flange 19 is connected to a known per se XYZ manipulator, not shown, which makes it possible for reaction cell 2 to be so positioned within space 1 relatively to the end of specimen holder 6 that the holder can be screwed into the wall of cell 2.

The performance of a test by means of the apparatus according to the invention is as follows.

Via vacuum bellows 5 a specimen 9 is introduced into space 1, which like reaction cell 2 has been evacuated, and cell 2 is manoeuvred by means of the XYZ manupulator into a correct position relative to the end of specimen holder 6 for the holder to be screwed into the wall of the cell. Subsequently the specimen in cell 2 is heated to the desired temperature by means of the heating coil 12, and the gas whose effect on the specimen 9 must be investigated is supplied through line 7. By means of known per se temperature gauging and control means and gauging and control means for the gas pressure and the gas flow rate, the temperature and the temperature rise in cell 2 and also the gas pressure and the amount of gas supplied are controlled. Via line 4 the test gas is discharged from reaction cell 2.

After the reaction at the pre-determined temperature and pressure has lasted a pre-determined period of time, the supply of gas is discontinued, and cell 2 is evacuated via line 4 by means of a known per se vacuum pump, not shown, to prevent gas residues from entering space 1. Thereafter the specimen holder 6 is unscrewed from the wall of cell 2 and this cell is raised by means of the XYZ manipulator, as viewed in Fig. 1, in order that the specimen may be introduced, through aperture 21, after this has been cleared by sliding away closure member 8, into the analysis chamber, not shown, of an apparatus for Auger electron spectroscopy or X-ray photo electron spectroscopy, where the surface of the specimen corroded under the influence of the gas can be further examined.

The specimen can rapidly be removed from the reaction cell, because cell 2 has a small volume, so that a vacuum can be quickly generated in it. As a consequence, the specimen can also rapidly be cooled in space 1, so that no undesirable reactions at other temperatures than the pre-determined high temperature can affect the specimen surface. Also, the surface of the specimen cannot be oxidized under the influence of the ambient air, because the specimen is introduced from reaction cell 2 into a space where vacuum prevails, and need not be removed from this space before being further examined.

It has been found that the apparatus according to the invention permits examination of the first stage of a corrosion process at the surface of a specimen at temperature of up to 1100°C and a gas pressure of up to 2 bar in the reaction cell.

Although the invention has been described with reference to one single embodiment, it will be clear to those skilled in the art that the embodiment shown and described can be modified without affecting the good operation of the apparatus. Thus various means can be used for heating the specimen. Also, the reaction cell need not necessarily be movable in space 1, when after the reaction the specimen is transported from the reaction cell _in vacuo_ to the analysis chamber by other means.

CLAIMS

1.      Apparatus for examining the effect of a gaseous medium on a material, characterized by said apparatus comprising a space in which a vacuum can be generated, a reaction cell within said space, said cell including heating means and having an aperture for introducing a specimen of the material into the cell, a supply line and a discharge line for the gaseous medium, and a specimen holder adapted to be coupled to said specimen introducing aperture in vacuum-tight relationship while the end of said specimen holder carries the specimen being tested, the specimen holder and the supply and discharge lines for the gaseous medium terminating outside the space in which the vacuum can be generated.

2.      Apparatus as claimed in claim 1, characterized in that the reaction cell is mounted so as to be movable within said space.

3.      Apparatus as claimed in claim 1 or 2, characterized in that the end of the specimen holder includes a tapered screw-threaded portion and the aperture in the reaction cell has corresponding female screw thread with a sealing ring being provided between the end of the threaded portion of the specimen holder and the aperture.

4.      Apparatus according to claim 3, characterized in that the sealing ring is made of Au.

5.      Apparatus according to claim 3 or 4, characterized by a conduit in said specimen holder for supplying coolant to the area where the specimen holder is connected to the wall of the reaction cell.

6. Apparatus according to any of the preceding claims, characterized in that the heating means comprise a heating coil of Pt, said coil being wound between two ceramic tubes with the outer ceramic tube being surrounded by at least one Pt heat shield, said heating means surrounding the specimen.

7. Apparatus as claimed in claim 6, characterized in that the heating means comprises a heating coil which surrounds the portion of the gas supply line terminating in said cell.

8. Apparatus as claimed in claim 1, characterized in that the space has a closable outlet aperture.

9. A reaction cell evidently designed for use with an apparatus as claimed in claims 1-8.

FIG.2

FIG.1

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| A | US-A-4 375 027 (R.J. ZETO et al.)<br>* Abstract; figures 1-5; column 1, line 15 - column 2, line 24; column 2, line 44 - column 5, line 14 * | 1,6,7 | G 01 N 17/00<br>B 01 L 1/02<br>B 01 J 3/00 //<br>G 01 N 23/227 |
| | --- | | |
| A | DE-A-2 611 050 (SIEMENS)<br>* Page 4, line 7 - page 5, line 12; figure 1 * | 1 | |
| | --- | | |
| A | GB-A-1 466 999 (V. ROLLINS)<br>* Page 1, lines 11-17; page 1, line 55 - page 2, line 103; figures 1,2 * | 1,6 | |
| | --- | | |
| A | EP-A-0 079 730 (A.G. DOCX)<br>* Abstract; page 4, line 11 - page 7, line 16; figure 4 * | 1,6 | TECHNICAL FIELDS SEARCHED (Int. Cl.4) |
| | --- | | |
| A | GB-A-1 430 367 (THE SECRETARY OF STATE FOR DEFENCE)<br>* Page 1, lines 8-68; page 2, lines 4-31; figures 1,2 * | 2,3,8 | B 01 L<br>B 01 J<br>F 27 B<br>F 27 D<br>G 01 N<br>H 01 J |
| | --- | | |
| A | US-A-3 817 084 (C.W. WHITEHEAD)<br>* Abstract; figure * | 1 | |
| | ----- | | |

The present search report has been drawn up for all claims

| Place of search | Date of completion of the search | Examiner |
|---|---|---|
| THE HAGUE | 17-06-1986 | SIEM T.D. |